# EUROPÄISCHE PATENTSCHRIFT

(11) **EP 2 008 794 B1**
(45) Veröffentlichungstag und Bekanntmachung des Hinweises auf die Patenterteilung: **14.06.2017**
(21) Anmeldenummer: 08011646.0
(22) Anmeldetag: 27.06.2008
(51) Int. Cl.: B29C 65/08, B65B 51/22, B65B 51/14, B65B 7/02, B29C 65/78, B65B 1/18, B65B 43/50

(54) **Verfahren und Vorrichtung zum Verschweißen von Säcken**
Method and device for welding bags
Procédé et dispositif pour souder des sacs

(30) Priorität: 29.06.2007 DE 102007030382
(43) Veröffentlichungstag der Anmeldung: 31.12.2008
(73) Patentinhaber: Haver & Boecker oHG, 59302 Oelde (DE)
(72) Erfinder: Brügge, Thomas, 59302 Oelde (DE)
(74) Vertreter: BSB Intellectual Property Law

(56) Entgegenhaltungen:
- EP-A2- 1 800 837

## Beschreibung

Die Erfindung betrifft eine Vorrichtung und ein Verfahren, wobei ein Verschweißen von Werkstücken und insbesondere von Säcken erfolgt. Erfindungsgemäß werden insbesondere Ventilsäcke mit Schüttgut gefüllt und anschließend wird das Sackventil verschweißt, um einen ungewünschten Materialaustritt zu verhindern. Bei einem bevorzugten Anwendungsfall erfolgt das Verschweißen von aus Papier oder Folie bestehenden oder mit Folien beschichteten Ventilsäcken nach dem Abfüllen von schüttfähigen Gütern, wie z. B. Baustoffen, Granulaten, chemischen Produkten etc. Es können auch andere Sacktypen, wie z.B. sogenannte Offensäcke verarbeitet werden, bei denen die Säcke über den gesamten Querschnitt oder einen großen Teil des Querschnitts befüllt werden.

Aus der EP 1 800 837 A2 sind eine Vorrichtung und ein Verfahren zum Verschweißen von Werkstücken bekannt geworden, wobei eine um ihre Längsachse rotierende Sonotrode zum Verschweißen in Richtung des Ambosses schwingt und zusammen mit dem ebenfalls drehbaren Amboss eine Doppelschweißnaht erzeugt.

Es sind im Stand der Technik unterschiedliche Packmaschinen bekannt geworden, bei denen nach dem Befüllen der Säcke die Säcke verschlossen werden, um den Sack dicht zu verschließen. Bei Ventilsäcken werden z.B. sogenannte selbstdichtende Ventilsäcke verwendet, die eigenständig bei einer Druckbelastung das Ventil schließen, sodass nur geringe Mengen an Schüttgut aus dem Sack wieder austreten. Die Dichtwirkung solcher selbstschließender Ventile wird in vielen Fällen nicht mehr als ausreichend angesehen, da die Kunden heutzutage erhöhte Anforderungen an die Sackdichtigkeit stellen, um beim weiteren Transport oder beim Verkauf saubere Umgebungsbedingungen zu erhalten.

Weiterhin sind Packmaschinen bekannt geworden, bei denen nach dem Füllvorgang Säcke bzw. Sackventile durch einen Schweißvorgang verschlossen werden, um auch ein Herausrieseln abgefüllten Schüttguts zu vermeiden. Als ein zuverlässiges Verfahren hat sich ein Ultraschallschweißverfahren herausgestellt, bei dem der Ultraschallhammer bzw. die Sonotrode in eine hochfrequente Schwingung versetzt wird, wodurch das zwischen Sonotrode und Amboss liegende Sackventil erhitzt und verschweißt wird.

Falls sich einzelne Produktpartikel im Bereich der Schweißnaht befinden, kann dies zu einer lokalen Schwächung der Schweißnaht führen, da an den entsprechenden Stellen keine oder nur eine geringe Verschweißung stattfindet. Um die Schweißnaht sicherer und den Sack dichter zu machen, sind deshalb Schweißverfahren bekannt geworden, bei denen gleichzeitig zwei in kleinem Abstand voneinander beabstandete Schweißnähte hergestellt werden, in dem beispielsweise ein im Querschnitt U-förmiger Amboss verwendet wird. Beim Schweißvorgang schlägt die Sonotrode gegen beide Schenkel des U's, sodass eine Doppelschweißnaht entsteht. Eventuell vorhandenes Schüttgut wird entweder nach außen oder in den Spalt zwischen die beiden Schweißnähte gedrängt. Nachteilig an diesem Verfahren ist allerdings, dass der maximale Abstand der beiden parallelen Schweißnähte auf die Breite der Sonotrode begrenzt ist. Im Bereich der Abfüllung von Schüttgütern, z.B. von Zement oder dergleichen weist eine typische Sonotrode eine Breite von etwa 5 oder 8 mm auf, sodass der Abstand zweier Schweißnähte auf die Breite von etwa 8 mm beschränkt ist.

Aufgrund des negativen Einflusses von vorhandenen Produktpartikeln durch eine mal mehr und mal weniger starke Kontamination im Bereich der vorgesehenen Schweißnaht des zu verschweißenden Ventils und aufgrund eventuell schwankender Qualität des Sackmaterials im Bereich des zu verschweißenden Ventils kann es vorkommen, dass ein Teil der Sackventile nicht ausreichend verschlossen wird.

Wenn die von der Füllmaschine gefüllten und verschlossenen Säcke aber nicht dicht sind, verschmutzen die anschließend beladenen Paletten und es erfolgt auch eine Verschmutzung der Anlagenteile auf dem Weg vom Füllstutzen nach dem Abwerfen des verschlossenen Sacks bis zum Palettierer, was unerwünscht ist.

Eine mögliche Lösung ist der Einsatz zweier separater Sonotroden und zweier Ambosse, die dann grundsätzlich in beliebigem Abstand zueinander angeordnet werden können. Ein erheblicher Nachteil einer solchen Anordnung ist allerdings, dass der Aufwand erheblich steigt. Sonotroden von Ultraschallschweißeinrichtungen sind qualitativ hochwertige Produkte, die hohe Materialanforderungen aufweisen und exakt gefertigt werden müssen, um eine hohe Qualität der Schweißnähte bei einer hohen Standzeit der Ultraschallschweißeinrichtung zu gewährleisten.

Es ist deshalb die Aufgabe der vorliegenden Erfindung eine Vorrichtung und ein Verfahren zur Verfügung zu stellen, womit nach der Abfüllung von Säcken eine zuverlässige Verschweißung möglich ist.

Diese Aufgabe wird gelöst durch eine Vorrichtung mit den Merkmalen des Anspruchs 1 und durch ein Verfahren mit den Merkmalen des Anspruchs 15. Bevorzugte Weiterbildungen sind Gegenstand der Unteransprüche. Weitere Vorteile und Merkmale ergeben sich aus der folgenden Beschreibung.

Die erfindungsgemäße Vorrichtung weist eine Schweißeinrichtung zum Verschweißen von Säcken und insbesondere zum Verschweißen von Ventilsäcken auf. Die Schweißeinrichtung umfasst wenigstens zwei Schweißbacken zur Herstellung einer Mehrfachschweißnaht. Erfindungsgemäß ist die Schweißeinrichtung derart strukturiert, dass wenigstens zwei Schweißnähte der Mehrfachschweißnaht nacheinander und beabstandet herstellbar sind. Dazu ist wenigstens eine der Schweißbacken durch eine Verstelleinrichtung zwischen wenigstens zwei voneinander beabstandeten Schweißpositionen bewegbar und insbesondere automatisch bewegbar vorgesehen.

Insbesondere ist die Schweißeinrichtung als Ultraschallschweißeinrichtung ausgeführt und eine Schweißbacke ist als Sonotrode und wenigstens eine Schweißbacke als Amboss ausgeführt.

Vorzugsweise sind wenigstens zwei Schweißnähte mit einem einstellbaren oder variablen Abstand herstellbar.

Die Erfindung bietet erhebliche Vorteile. Im Unterschied zum Stand der Technik ist es mit der vorliegenden Erfindung möglich, zwei Schweißnähte in einem variablen Abstand zueinander vorzusehen. Dadurch kann bei einem z.B. feineren Schüttgut ein kleinerer Abstand zwischen den beiden Schweißnähten vorgesehen werden, während bei Abfüllung von gröberem Schüttgut ein größerer Abstand der beiden Schweißnähte gewählt wird.

Die erfindungsgemäße Vorrichtung dient insbesondere zur Herstellung einer Doppelschweißnaht und umfasst insbesondere eine Ultraschallschweißeinrichtung, die eine Sonotrode oder auch eine Hammereinrichtung umfasst. Möglich ist auch ein anderes Schweißverfahren, so kann beispielsweise Heißluft zugeführt werden, während die Schweißbacken das Sackventil verschweißen.

Die Vorrichtung ist insbesondere als Packmaschine ausgebildet oder umfasst eine Packmaschine zum Abfüllen von Schüttgut in Offensäcke oder Ventilsäcke. Dabei umfasst die Packmaschine einen oder mehrere Füllstutzen zum Abfüllen des Schüttguts. Die Maschine kann als sogenannter Reihenpacker ausgebildet sein, bei der ein oder mehrere Füllstutzen parallel zueinander ausgerichtet sind oder sie kann als rotierende Packmaschine ausgeführt sein, bei der die Packmaschine sich während des Füllvorgangs um ihre Achse dreht, sodass die Aufsteck- und die Abnahmeposition für alle Säcke winkelmäßig gleich sind.

Es ist insbesondere bevorzugt, dass die Schweißeinrichtung geeignet ist, die Mehrfachschweißnaht mit einer größeren Gesamtbreite als die Breite der Sonotrode herzustellen. Das kann bedeuten, dass der Abstand der beiden Schweißnähte einer Doppelschweißnaht größer ist als die Breite der Sonotrode, oder es kann bedeuten, dass die Doppelschweißnaht aneinander angrenzende Schweißnähte aufweist, deren gesamte Breite größer ist als die Breite der Sonotrode.

Bevorzugt ist bei einer Sonotrodenbreite von z.B. 8 mm ein Schweißnahtabstand von 5, 8, 10, 12 oder 15 mm. Bei anderen Sonotrodenbreiten werden entsprechend andere Schweißnahtabstände bevorzugt. Möglich ist aber z.B. auch bei einer Sonotrodenbreite von z.B. 6 mm ein Schweißnahtabstand von z.B. 10, 12 oder 15 mm.

Besonders bevorzugt ist die Schweißeinrichtung geeignet, mehrere einzelne und ortsversetzte Schweißnähte nacheinander zu erstellen, um die Mehrfachschweißnaht herzustellen. Damit wird auf einfache Art und Weise eine Mehrfachschweißnaht hergestellt, bei der die einzelnen Schweißnähte beabstandet sind. In allen Ausgestaltungen umfasst die Schweißeinrichtung vorzugsweise einen Träger, an dem die Sonotrode und/oder der Amboss aufgenommen ist bzw. sind.

Vorzugsweise umfasst die Schweißeinrichtung wenigstens einen Träger, an dem eine oder beide Schweißbacken aufgenommen sind. Möglich ist es auch, dass für jede Schweißbacke einen eigener Träger vorgesehen ist.

In besonders bevorzugten Ausgestaltungen ist wenigstens eine Schweißbacke mittels wenigstens eines Schwenkarms verschwenkbar.

Insbesondere ist der Träger mittels zweier Schwenkarme parallelogrammartig wenigstens von einer Ruheposition in wenigstens eine Arbeitsposition bzw. zwei Arbeitspositionen verschwenkbar angeordnet. Die Ruheposition wird insbesondere eingenommen, wenn ein Sack am Füllstutzen gefüllt wird. In der Arbeitsposition findet die Verschweißung des Sackes bzw. des Sackventils statt. Vorzugsweise ist der Träger von einer ersten Schweißposition zum Schweißen einer ersten Schweißnaht in eine zweite Schweißposition zum Schweißen einer zweiten Schweißnaht bringbar, sodass die beiden Schweißnähte der Mehrfachschweißnaht nacheinander geschweißt werden.

Vorteilhafterweise ist wenigstens ein Schwenkarm längenverstellbar, um an den zwei voneinander beabstandeten Schweißpositionen die wenigstens zwei Schweißnähte zu erstellen.

Vorteilhafterweise wird der Träger mittels zweier Schwenkarme von der Ruheposition in die Arbeitsposition überführt. Insbesondere sind die beiden Schwenkarme parallelogrammartig angeordnet, sodass sich etwa eine parallelogrammartige Bewegung des Trägers von der Ruheposition in die Arbeitsposition und zurück ergibt. Durch eine parallelogrammartige oder näherungsweise parallelogrammartige Halterung des Trägers wird gewährleistet, dass die Sonotrode und der Amboss ständig eine waagerechte Anordnung aufweisen, die bei der Verschweißung von Ventilsäcken erforderlich ist. Insbesondere findet über die Schwenkarme eine vertikale Bewegung zwischen der Ruheposition und der Arbeitsposition statt. Vorzugsweise ist die Ruheposition oberhalb der Arbeitsposition angeordnet, sodass der Träger während des Füllvorgangs eines Sackes sich insbesondere oberhalb des Sackes befindet.

In bevorzugten Weiterbildungen ist der Träger kippbar vorgesehen. Durch einen kippbaren Träger kann die Position des Trägers gegenüber einem zu verschweißenden Sackventil variiert werden, sodass in einer ungekippten Stellung die erste Schweißnaht herstellbar ist und in einer gekippten Stellung die zweite Schweißnaht, die dann von der ersten Schweißnaht beabstandet ist.

In bevorzugten Weiterbildungen ist wenigstens ein Schwenkarm längenverstellbar. Falls nur ein Schwenkarm längenverstellbar ist, kann über die Längenverstellung des Schwenkarms die Kippbewegung des Trägers realisiert werden, wenn der zweite Schwenkarm der parallelogrammartigen Struktur seine Länge nicht ändert. Vorzugsweise kann die Länge des Schwenkarms in mehreren Stufen änderbar sein, um eine entsprechende Anzahl von Schweißnähten herstellen zu können.

Insbesondere ist wenigstens ein Schwenkarm über eine Kolben-Zylinder-Einheit längenverstellbar, wobei die Kolben-Zylinder-Einheit zwei, drei oder mehr unterschiedliche Längeneinstellungen aufweisen kann.

Vorzugsweise ist in einer ersten Längenstellung des Schwenkarms eine erste Schweißnaht und in einer zweiten Längenstellung des Schwenkarms eine zweite Schweißnaht herstellbar, welche von der ersten Schweißnaht beabstandet ist.

In anderen Ausgestaltungen können auch beide Schwenkarme längenverstellbar vorgesehen sein. Dann ist insbesondere eine Parallelverschiebung des Trägers und somit von Sonotrode und Amboss möglich, wodurch ebenfalls parallel angeordnete Schweißnähte hergestellt werden können.

In bevorzugten Weiterbildungen ist der Amboss schwenkbar angeordnet, um durch ein Wegschwenken ein Einführen des Sackventils zu ermöglichen, welches nach dem Zurückschwenken des Ambosses verschweißt wird.

In allen Ausgestaltungen ist vorzugsweise wenigstens ein Kurzschlusssensor an der Schweißeinrichtung vorgesehen, um das Vorhandensein eines Sackes in der Schweißeinrichtung zu überprüfen.

In allen Ausgestaltungen kann eine Einstelleinrichtung vorgesehen sein, über die der Abstand der zwei Schweißnähte einstellbar ist.

Vorzugsweise besteht die Sonotrode wenigstens teilweise und nahezu vollständig oder vollständig aus Titan.

Das erfindungsgemäße Verfahren zum Verschweißen von Säcken dient insbesondere zum Verschweißen von Ventilsäcken und wird unter Verwendung einer Schweißeinrichtung durchgeführt, die eine Sonotrode und wenigstens einen Amboss umfasst. In einer ersten Stellung des Trägers wird eine erste Schweißnaht und in einer zweiten Stellung des Trägers wird eine zweite Schweißnaht einer Mehrfachschweißnaht hergestellt, wobei der Abstand der zwei Schweißnähte insbesondere variabel ist und vorzugsweise einstellbar sein kann.

Vorzugsweise sind die Sonotrode und der Amboss an einem Träger aufgenommen, der von der ersten in die zweite Position verschwenkt wird.

In allen Fällen werden vorzugsweise vor dem Verschweißen Ventilsäcke gefüllt. Das Verfahren kann an einer rotierenden Füllanlage eingesetzt werden.

Weitere Vorteile und Anwendungsmöglichkeiten ergeben sich aus den Ausführungsbeispielen, die nun im Folgenden mit Bezug auf die Figuren beschrieben werden.

Darin zeigen:
- Fig. 1: eine stark schematische Aufsicht auf eine rotierende Packmaschine,
- Fig. 2: eine Seitenansicht einer einzelnen Packmaschine,
- Fig. 3: eine Vorderansicht der Packmaschine nach Fig. 2,
- Fig. 4: eine Schweißeinrichtung in der geöffneten Ruhestellung,
- Fig. 5: die Schweißeinrichtung nach Fig. 4 in der geschlossenen Ruhestellung,
- Fig. 6: die Schweißeinrichtung nach Fig. 4 in der ersten Schweißstellung im geöffneten Zustand,
- Fig. 7: die Schweißeinrichtung nach Fig. 4 in der ersten Schweißstellung im geschlossenen Zustand,
- Fig. 8: die Schweißeinrichtung nach Fig. 4 in der zweiten Schweißstellung im geöffneten Zustand, und
- Fig. 9: die Schweißeinrichtung nach Fig. 4 in der zweiten Schweißstellung im geschlossenen Zustand, und
- Fig. 10: eine schematische Aufsicht auf einen Abschnitt eines erfindungsgemäß verschweißten Sackventils.

Mit Bezug auf die Figuren werden nun Varianten eines Ausführungsbeispiels der Erfindung beschrieben.

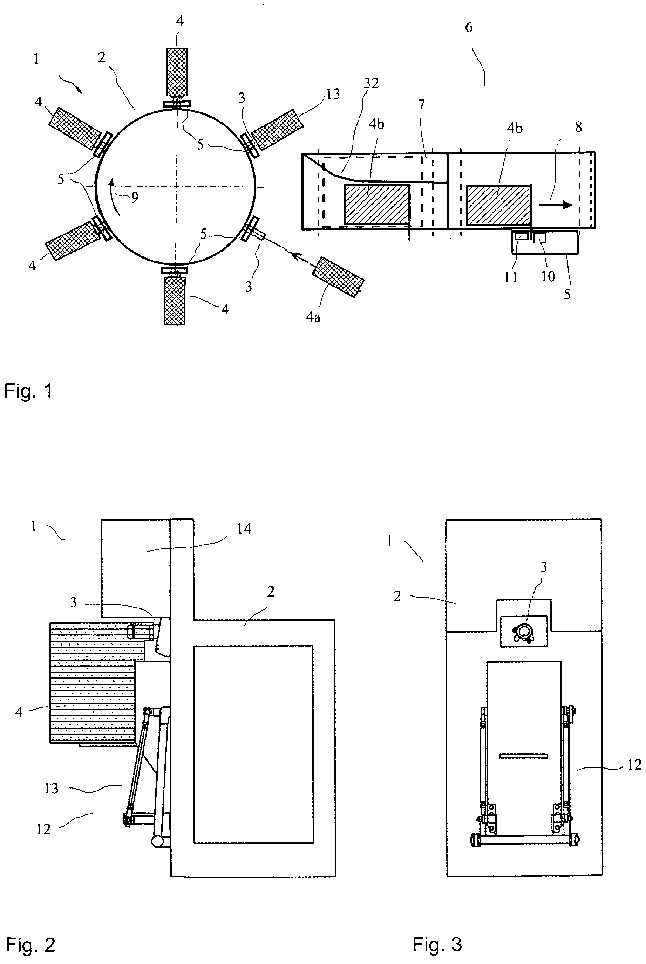

In Fig. 1 ist eine stark schematische Aufsicht auf eine erfindungsgemäßen Packmaschine 1 dargestellt. Die Packmaschine ist drehbar und weist am Gehäuse 2 hier insgesamt sechs Füllstutzen 3 auf, mit denen gleichzeitig eine entsprechende Anzahl an Säcken 4 befüllt werden können.

Bei der in Fig. 1 dargestellten Packmaschine 1 ist eine Austrageband 6 vorgesehen, an dem ein Leitgestänge 32 angeordnet ist, um die auf das Austragsband 6 gelangenden gefüllten Ventilsäcke 4b zu einer Seite des Austragebandes zu bewegen und dort entlang der Längsseite anzuordnen. Mit dem Austrageband 6 werden die gefüllten und verschweißten Säcke 4 weiter in Förderrichtung 8 abtransportiert.

An der Aufsteckwinkelposition kann ein Aufsteckautomat vorgesehen sein, der die leeren Säcke 4a auf die Füllstutzen 3 der Pack- bzw. Füllmaschine 1 aufsteckt.

Der Füllvorgang beim Füllen der Ventilsäcke 4 wird hier elektronisch gesteuert. Dazu wird mittels einer Bruttowaage das Füllgewicht des Sacks 4 inkl. des Sackgewichts periodisch gemessen. Wenn das angestrebte Füllgewicht nahezu erreicht wird, wird der Füllstrom verlangsamt und schließlich gestoppt. Der gefüllte Sack 4b kann abgenommen werden. Um ein Austreten von Füllmaterial bei der Abnahme und dem weiteren Transport des Sacks 4 zu verhindern, wird das Ventil 4c des Sacks mit der Ultraschallschweißeinrichtung 5 nach erfolgten Füllvorgang noch während des Drehens in Drehrichtung 9 verschweißt.

Bei der in Figur 1 dargestellten Ausführungsvariante ist für jeden Füllstutzen eine separate Schweißeinrichtung 5 vorgesehen. In einer anderen Variante kann auch eine Schweißeinrichtung 5 an dem Austrageband 6 vorgesehen sein, die die auf dem Austrageband 6 angeordneten Säcke nacheinander verschweißt. Der Transport des Austragebandes 6 kann dazu z.B. getaktet erfolgen.

In den Figuren 2 und 3 ist eine weitere erfindungsgemäße Packmaschine 1 dargestellt, die hier als einzelne Standpackmaschine ausgeführt ist. Wenn mehrere solcher Packmaschinen 1 nebeneinander gesetzt werden, entsteht ein sogenannter Reihenpacker.

Die Packmaschine 1 ist in Figur 2 in einer Seitenansicht und in Figur 3 in einer Vorderansicht dargestellt.

Der in Figur 2 halb transparent dargestellte Sack 4 hängt an dem Füllstutzen 3, der über eine Dichtmanschette (nicht dargestellt) verfügen kann, um das Sackventil 4c während des Füllvorgangs gegenüber dem Füllstutzen 3 abzudichten.

Oberhalb des Füllstutzens 3 ist eine Staubhaube 14 angeordnet, aus der Luft und beim Füllprozess entweichendes staubförmiges Schüttgut abgesaugt wird.

Der Sack wird von einem Sackstuhl 12 unterstützt und gehalten, der über eine Parallelogrammführung mit einem Gestänge 13 verfahrbar ist.

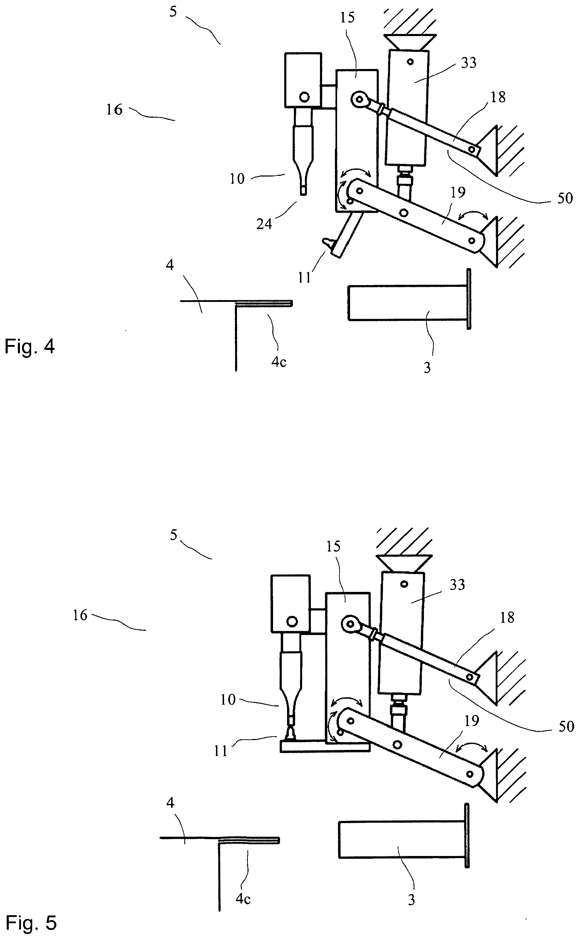

Die in den Ausführungsbeispielen nach Figuren 1, 2 und 3 verwendete Schweißeinrichtung 5 ist in schematischer Form in den Figuren 4 bis 9 in unterschiedlichen Positionen dargestellt.

In der Figur 4 ist die Schweißeinrichtung 5 in einer schematischen Seitenansicht in der Ruheposition 16 dargestellt. In der Ruheposition befindet sich der Träger 15 mit der daran geordneten Sonotrode 10 und dem Amboss 11 oberhalb des Füllstutzens 3, an dem ein zu füllender Sack 4 mit einem Sackventil 4c aufgeschoben sein kann. Die Schweißeinrichtung 5 bzw. eine oder beide Schweißbacken 10 und 11 ist bzw. sind über eine Verstelleinrichtung 50 automatisch zwischen einer ersten Position 30 und einer zweiten Position 31 verstellbar vorgesehen.

Die Verstelleinrichtung 50 ist hier als eine längenverstellbare Kolben-Zylinder-Einheit 27 ausgeführt, die einen Schwenkarm 18 bildet. Der Schwenkarm 18 ist längenverstellbar, um in einer ersten Längenstellung 28 die Schweißeinrichtung 5 in eine Position 30 zu Erstellung einer ersten Schweißnaht 21 und in einer zweiten Längenstellung 29 die Schweißeinrichtung 5 in eine Position 31 zu Erstellung einer zweiten Schweißnaht 22 zu überführen.

Bei der in Figur 4 dargestellten Stellung ist die Schweißeinrichtung 5 in der geöffneten Ruhestellung dargestellt, in der der Amboss 11 an dem Träger 15 nach unten geschwenkt ist, um einen Zwischenraum zwischen Sonotrode 10 und Amboss 11 z.B. zum Einführen eines Sackventils 4c freizugeben.

In Figur 5 ist die Schweißeinrichtung nach Figur 4 ebenfalls in der Ruhestellung 16 dargestellt, wobei die Schweißeinrichtung 5 allerdings geschlossen ist, so dass die Sonotrode 10 und der Amboss 11 in direkten Kontakt geraten. Ein nicht dargestellter Kurzschlusssensor kann als Kurzschlussüberwachungseinrichtung vorgesehen sein, um das Vorhandensein eines Sackventils 4c zwischen Sonotrode 10 und Amboss 11 zu überprüfen.

In der Ruheposition 16 kann in periodischen Abständen die in Figur 5 dargestellte Stellung eingenommen werden, um zu überprüfen, ob der Kurzschlusssensor noch funktionstüchtig ist. Bei der in der Figur 5 dargestellten Position muss der Kurzschlusssensor ein Signal ausgeben, da die Sonotrode 10 und der Amboss 11 in direkten Kontakt stehen. Das ist ein Zustand, der beim Schweißen zu vermeiden ist, um Schäden an der Sonotrode 10 oder dem Amboss 11 zu vermeiden.

Durch Betätigung der Kolben-Zylinder-Einheit 33 wird der Träger 15 mit der Sonotrode 10 und dem Amboss 11 vertikal nach unten verfahren, wobei der Träger 15 an den Schwenkarmen 18 und 19 geführt wird. Über die parallelogrammartige Struktur der Schwenkeinrichtung mit den Schwenkarmen 18 und 19 wird sicher gestellt, dass die Sonotrode 10 und der Amboss 11 immer gerade oder im Wesentlichen horizontal ausgerichtet sind, was beim Verschweißen von Ventilsäcken wichtig ist.

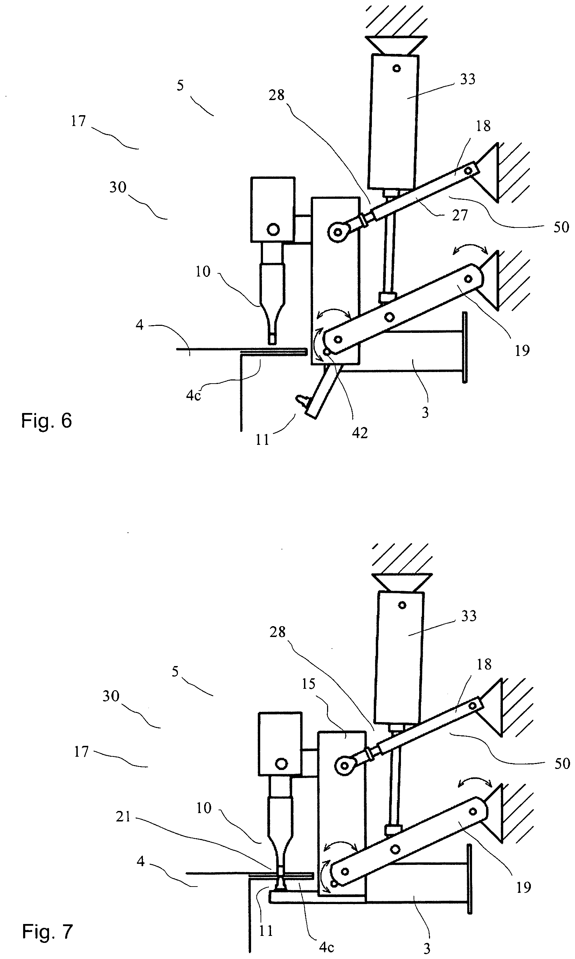

Nach der Überführung des Trägers 15 aus der Ruheposition 16 in die Arbeitsposition 17 wird die in Figur 6 dargestellte Position erreicht, in der die Kolben-Zylinder-Einheit 33 ausgefahren ist. Um das Einführen des Sackventils 4c zwischen der Sonotrode 10 und dem Amboss 11 zu ermöglichen, wird der Amboss 11 um die Schwenkachse 42 nach unten geschwenkt und das Sackventil 4c kann zwischen Sonotrode 10 und Amboss 11 eingeführt werden.

Durch ein Zurückschwenken des Ambosses 11 um die Schwenkachse 42 in Richtung auf die Sonotrode 10 wird die in Figur 7 dargestellte Stellung erreicht, die ebenfalls der Arbeitsposition 17 entspricht, wobei sich aber die Sonotrode 10 und der Amboss 11 in geschlossener Stellung befinden.

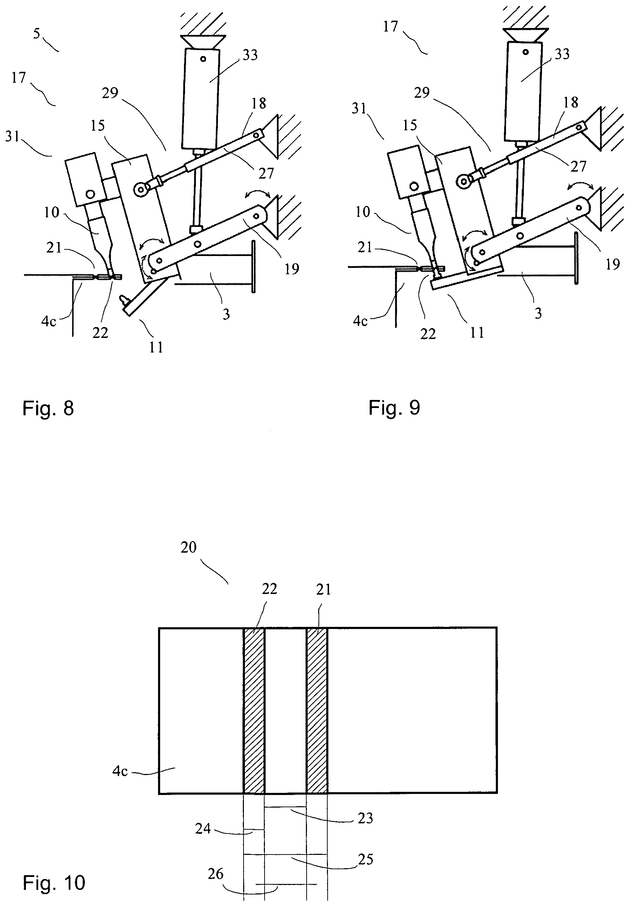

Dabei befindet sich die Schweißeinrichtung 5 in der ersten Position, um die erste Schweißnaht 21 der Doppelschweißnaht 20 herzustellen (vgl. Figur 10). Der Träger 15 ist vertikal oder nahezu vertikal ausgerichtet und die Sonotrode 10 und der Amboss 11 können eine erste Schweißnaht 21 herstellen.

Bei der in den Figuren 6 und 7 dargestellten ersten Position 30 befindet sich der als Kolben-Zylinder-Einheit 27 ausgebildete oder eine solche Einheit umfassende Schwenkarm 18 in der ersten Längenstellung 28.

Durch Ausfahren der Kolben-Zylinder-Einheit 27 wird der in Figur 8 dargestellte Zustand erreicht, in der der Träger 15 in der zweiten Position 31 angeordnet ist, um die zweite Schweißnaht 22 herzustellen.

Zunächst wird nach dem Erstellen der ersten Schweißnaht 21 der Amboss 11 aus der in Figur 7 dargestellten Stellung zurückgeschwenkt, um den Amboss 11 von dem Sackventil 4c zu lösen. Anschließend wird die Kolben-Zylinder-Einheit 27 in die zweite Längenstellung 29 ausgefahren, wodurch der Träger 15 aus der Vertikalen verschwenkt wird. Dadurch ergibt sich eine andere Kontaktstelle der Sonotrode 10 mit dem Sackventil 4c, wodurch sich nach Zurückschwenken des Ambosses 11 auf die Sonotrode 10 zu die in Figur 9 dargestellte zweite Schweißstellung 31 ergibt, in der die zweite Schweißnaht 22 hergestellt wird, die von der ersten Schweißnaht 21 um einen Abstand 23 beabstandet ist.

Somit.wird auf eine einfache Art und Weise eine flexible Gestaltung einer doppelten Schweißnaht 20 ermöglicht, indem durch aufeinander folgendes Erstellen jeweils einzelner Schweißnähte eine Mehrfach- bzw. Doppelschweißnaht hergestellt wird, die durch eine Längenvariation beim Ausfahren der Kolben-Zylinder-Einheit 27 einen variablen Abstand der einzelnen Schweißnähte aufweist.

In Figur 10 ist schematisch ein Abschnitt eines Sackventils 4c dargestellt, an dem eine Doppelschweißnaht 20 mit zwei einzelnen Schweißnähten 21 und 22 vorgesehen ist. Jede Schweißnaht weist eine Breite 24 von etwa 8 mm auf, was der Breite der Sonotrode 10 entspricht, während sich jede Schweißnaht in Längsrichtung über die komplette Breite des Sackventils 4c erstreckt. Die Größe des Sackventils 4c ist an den Füllstutzen 3 angepasst, welches Durchmesser zwischen etwa 3 und 10 cm oder mehr aufweisen kann. Eine typische Länge der als Ultraschallhammer bzw. Sonotrode 10 ausgeführten Schweißbacke beträgt etwa 10 oder 20 cm, kann aber auch noch größer oder kleiner sein. Die Schweißbacken weisen vorzugsweise eine solche Länge auf, dass sie sich über die komplette Breite des Sackventils 4c erstrecken.

Der Abstand 26 der beiden Schweißnähte 21 und 22 beträgt hier im Ausführungsbeispiel etwa 12 mm, kann aber auch größer oder kleiner sein. Es ergibt sich ein lichter Abstand 23, der in einzelnen Ausgestaltungen auch gegen 0 gehen kann, wenn die beiden Schweißnähte 21 und 22 direkt nebeneinander gesetzt werden.

Die automatische Verstellung der Schweißeinrichtung 5 zwischen den einzelnen Positionen kann auch über eine lineare Bewegung anstatt einer Schwenkbewegung erfolgen. Möglich ist es beispielsweise, dass die Schweißeinrichtung 5 insgesamt linear gegenüber dem Sackventil 4c verfahren wird, um die beiden Schweißnähte 21 und 22 nacheinander zu erzeugen.

In weiteren Ausgestaltungen der Erfindung können auch mehr als zwei einzelne Schweißnähte nebeneinander gesetzt werden, um z.B. eine Dreifachschweißnaht herzustellen.

### Bezugszeichenliste:

- 1: Packmaschine
- 2: Gehäuse
- 3: Füllstutzen
- 4: Sack
- 4a: leerer Sack
- 4b: voller Sack
- 4c: Sackventil
- 5: Schweißeinrichtung
- 6: Austrageband
- 7: Förderband
- 8: Förderrichtung
- 9: Drehrichtung
- 10: Sonotrode
- 11: Amboss
- 12: Sackstuhl
- 13: Gestänge
- 14: Staubhaube
- 15: Träger
- 16: Ruheposition
- 17: Arbeitsposition
- 18: Erster Schwenkarm
- 19: Zweiter Schwenkarm
- 20: Doppelschweißnaht
- 21: Erste Schweißnaht
- 22: Zweite Schweißnaht
- 23: Abstand
- 24: Schweißnahtbreite
- 25: Gesamtbreite
- 26: Abstand
- 27: Kolben-Zylinder-Einheit
- 28: Erste Längenstellung
- 29: Zweite Längenstellung
- 30: Erste Position
- 31: Zweite Position
- 32: Leitgestänge
- 33: Kolben-Zylinder-Einheit
- 42: Schwenkachse
- 50: Verstelleinrichtung

## Patentansprüche

1. Vorrichtung (1) mit einer Schweißeinrichtung (5) zum Verschweißen von Säcken (4), insbesondere von Ventilsäcken (4), wobei die Schweißeinrichtung (5) wenigstens zwei Schweißbacken (10, 11) zur Herstellung einer Mehrfachschweißnaht (20) umfasst, **dadurch gekennzeichnet, dass** die Schweißeinrichtung (5) derart strukturiert ist, dass wenigstens zwei Schweißnähte (21, 22) der Mehrfachschweißnaht (20) nacheinander und beabstandet herstellbar sind, wozu wenigstens eine der Schweißbacken (10, 11) durch eine Verstelleinrichtung (50) zwischen wenigstens zwei voneinander beabstandeten Schweißpositionen bewegbar ist.

2. Vorrichtung nach Anspruch 1, wobei eine Schweißbacke (10) als Sonotrode (10) und wenigstens eine Schweißbacke (11) als Amboss (11) ausgeführt ist.

3. Vorrichtung nach Anspruch 1 oder 2, wobei wenigstens zwei Schweißnähte (21, 22) mit einem einstellbaren Abstand (26) herstellbar sind.

4. Vorrichtung nach Anspruch 1, 2 oder 3, welche eine Packmaschine (1) für Ventilsäcke (4) umfasst, welche einen oder mehrere Füllstutzen (3) zum Abfüllen eines Schüttguts umfasst.

5. Vorrichtung nach mindestens einem der vorhergehenden Ansprüche, wobei die Schweißeinrichtung (5) geeignet ist, mehrere einzelne ortsversetzte Schweißnähte (21,22) nacheinander zu erstellen, um die Mehrfachschweißnaht (20) herzustellen.

6. Vorrichtung nach mindestens einem der vorhergehenden Ansprüche, wobei wenigstens eine Schweißbacke (10, 11) mittels eines Schwenkarms (18, 19) verschwenkbar ist.

7. Vorrichtung nach dem vorhergehenden Anspruch, wobei die Schweißeinrichtung (5) einen Träger (15) umfasst, an dem die zwei Schweißbacken (10, 11) aufgenommen sind, und wobei der Träger (15) mittels zweier Schwenkarme (18, 19) parallelogrammartig von einer Ruheposition (16) in eine Arbeitsposition (17) schwenkbar ist.

8. Vorrichtung nach mindestens einem der vorhergehenden Ansprüche 6 bis 7, wobei wenigstens ein Schwenkarm (18, 19) längenverstellbar ist, um an den zwei voneinander beabstandeten Schweißpositionen die wenigstens zwei Schweißnähte zu erstellen.

9. Vorrichtung nach mindestens einem der vorhergehenden Ansprüche 6 bis 8, wobei der Träger (15) kippbar ist.

10. Vorrichtung nach mindestens einem der vorhergehenden Ansprüche 6 bis 9, wobei die Länge des Schwenkarms (18, 19) in mehreren Stufen änderbar ist.

11. Vorrichtung nach mindestens einem der vorhergehenden Ansprüche 6 bis 10, wobei wenigstens ein Schwenkarm (18, 19) über eine Kolben-Zylinder-Einheit (27) längenverstellbar ist.

12. Vorrichtung nach einem der vorhergehenden Ansprüche 6 bis 11, wobei in einer ersten Längenstellung (28) des Schwenkarms (18) eine erste Schweißnaht (21) und in einer zweiten Längenstellung (29) des Schwenkarms (18) eine zweite Schweißnaht (22) herstellbar ist, welche von der ersten Schweißnaht (21) beabstandet ist.

13. Vorrichtung nach mindestens einem der vorhergehenden Ansprüche 6 bis 12, wobei beide Schwenkarme (18, 19) längenverstellbar sind.

14. Vorrichtung nach mindestens einem der vorhergehenden Ansprüche 2 bis 13, wobei der Amboss (11) schwenkbar angeordnet ist.

15. Verfahren zum Verschweißen von Säcken, insbesondere von Ventilsäcken (4) unter Verwendung einer wenigstens zwei Schweißbacken (10, 11) umfassenden Schweißeinrichtung (5), mit welcher in einer ersten Stellung eine erste Schweißnaht (21) und in einer zweiten Stellung eine zweite Schweißnaht (22) einer Mehrfachschweißnaht (20) hergestellt wird, wobei die beiden Schweißnähte (21, 22) beabstandet sind und wobei der Abstand der zwei Schweißnähte (21, 22) insbesondere variabel ist.

## Claims

1. Apparatus (1) comprising a welding device (5) for welding bags (4), in particular valve bags (4), wherein the welding device (5) comprises at least two welding jaws (10, 11) for manufacturing a multiple weld seam (20), **characterized in that** the welding device (5) is structured such that at least two weld seams (21, 22) of the multiple weld seam (20) can be manufactured sequentially and spaced apart, to which purpose an adjustment device (50) can move at least one of the welding jaws (10, 11) between at least two spaced-apart welding positions.

2. The apparatus according to claim 1 wherein a welding jaw (10) is configured as a sonotrode (10) and at least one welding jaw (11), as an anvil (11) .

3. The apparatus according to claim 1 or 2 wherein at least two weld seams (21, 22) can be manufactured at an adjustable distance (26).

4. The apparatus according to claim 1, 2 or 3, comprising a packaging machine (1) for valve bags (4) which comprises one or more filling spouts (3) for bagging bulk material.

5. The apparatus according to at least one of the preceding claims wherein the welding device (5) is suitable to successively manufacture multiple single weld seams (21, 22) in offset locations to manufacture the multiple weld seam (20).

6. The apparatus according to at least one of the preceding claims wherein at least one welding jaw (10, 11) is pivotable by means of a swivel arm (18, 19).

7. The apparatus according to the preceding claim wherein the welding device (5) comprises a support (15) which accommodates the two welding jaws (10, 11) and which support (15) can be pivoted parallelogram-like from a rest position (16) to an operating position (17) by means of two swivel arms (18, 19).

8. The apparatus according to at least one of the preceding claims 6 to 7 wherein at least one swivel arm (18, 19) is longitudinally adjustable so as to manufacture the at least two weld seams in the two spaced-apart welding positions.

9. The apparatus according to at least one of the preceding claims 6 to 8 wherein the support (15) is tiltable.

10. The apparatus according to at least one of the preceding claims 6 to 9 wherein the length of the swivel arm (18, 19) can be adjusted in multiple steps.

11. The apparatus according to at least one of the preceding claims 6 to 10 wherein at least one swivel arm (18, 19) is longitudinally adjustable by means of a piston-cylinder unit (27).

12. The apparatus according to any of the preceding claims 6 to 11 wherein a first weld seam (21) can be manufactured in a first longitudinal position (28) of the swivel arm (18) and a second weld seam (22) spaced apart from the first weld seam (21) can be manufactured in a second longitudinal position (29) of the swivel arm (18).

13. The apparatus according to at least one of the preceding claims 6 to 12 wherein both swivel arms (18, 19) are longitudinally adjustable.

14. The apparatus according to at least one of the preceding claims 2 to 13 wherein the anvil (11) is disposed pivotable.

15. Method for welding bags, in particular valve bags (4), employing a welding device (5) comprising at least two welding jaws (10, 11) with which a first weld seam (21) is manufactured in a first position, and a second weld seam (22) of a multiple weld seam (20) is manufactured in a second position wherein the two weld seams (21, 22) are spaced apart and wherein the distance between the two weld seams (21, 22) is in particular variable.

## Revendications

1. Dispositif (1) doté d'un poste de soudage (5) pour souder des sacs (4), notamment des sacs à valve (4), le poste de soudage (5) comprenant au moins deux mâchoires de soudage (10, 11) pour fabriquer une soudure multiple (20), **caractérisé en ce que** le poste de soudage (5) est structuré de telle sorte qu'au moins deux soudures (21, 22) de la soudure multiple (20) sont réalisables l'une après l'autre et espacées, aux fins de quoi au moins une des mâchoires de soudage (10, 11) peut être déplacée, par un dispositif de réglage (50), entre au moins deux positions de soudage espacées l'une de l'autre.

2. Dispositif selon la revendication 1, une mâchoire de soudage (10) ayant la forme d'une sonotrode (10), et au moins une mâchoire de soudage (11) ayant la forme d'une enclume (11).

3. Dispositif selon la revendication 1 ou 2, au moins deux soudures (21, 22) étant réalisables espacées d'une distance réglable (26).

4. Dispositif selon la revendication 1, 2 ou 3, qui comprend une machine d'emballage (1) pour sacs à valve (4), laquelle comprend un ou plusieurs becs de remplissage (3) pour ensacher un matériau en vrac.

5. Dispositif selon au moins l'une quelconque des revendications précédentes, le poste de soudage (5) étant susceptible de réaliser l'une après l'autre plusieurs soudures individuelles (21, 22) à différents endroits pour fabriquer ladite soudure multiple (20).

6. Dispositif selon au moins l'une quelconque des revendications précédentes, au moins une mâchoire de soudage (10, 11) étant pivotable au moyen d'un bras articulé (18, 19).

7. Dispositif selon la revendication précédente, le poste de soudage (5) comprenant un support (15) sur lequel sont montées les deux mâchoires de soudage (10, 11), et le support (15) étant pivotable, au moyen de deux bras articulés (18, 19), pour passer d'une position de repos (16) à une position de travail (17) selon une trajectoire décrivant un parallélogramme.

8. Dispositif selon au moins l'une quelconque des revendications précédentes 6 à 7, au moins un bras articulé (18, 19) étant réglable en longueur pour réaliser les au moins deux soudures aux deux positions de soudage espacées l'une de l'autre.

9. Dispositif selon au moins l'une quelconque des revendications précédentes 6 à 8, le support (15) pouvant être basculé.

10. Dispositif selon au moins l'une quelconque des revendications précédentes 6 à 9, la longueur du bras articulé (18, 19) étant variable en plusieurs paliers.

11. Dispositif selon au moins l'une quelconque des revendications précédentes 6 à 10, au moins un bras articulé (18, 19) étant réglable en longueur au moyen d'une unité à piston-cylindre (27).

12. Dispositif selon l'une quelconque des revendications précédentes 6 à 11, une première soudure (21) étant réalisable dans une première position en longueur (28) du bras articulé (18), et une deuxième soudure (22) dans une deuxième position en longueur (29) du bras articulé (18), ladite deuxième soudure (22) étant espacée de ladite première soudure (21).

13. Dispositif selon au moins l'une quelconque des revendications précédentes 6 à 12, les deux bras articulés (18, 19) étant réglables en longueur.

14. Dispositif selon au moins l'une quelconque des revendications précédentes 2 à 13, l'enclume (11) étant agencée pivotante.

15. Procédé pour souder des sacs, notamment des sacs à valve (4), en utilisant un poste de soudage (5) comprenant au moins deux mâchoires de soudage (10, 11), ledit poste de soudage (5) permettant de fabriquer, dans une première position, une première soudure (21) et, dans une deuxième position, une deuxième soudure (22) d'une soudure multiple (20), les deux soudures (21, 22) étant espacées l'une de l'autre et l'espace séparant lesdites deux soudures (21, 22) étant notamment variable.
